**Europäisches Patentamt**

**European Patent Office**

**Office européen des brevets**

(11) Veröffentlichungsnummer: **0 476 188 A1**

## (12) EUROPÄISCHE PATENTANMELDUNG

(21) Anmeldenummer: **90202508.9**

(22) Anmeldetag: **21.09.90**

(51) Int. Cl.5: **B23Q 3/10**, B23Q 1/02, B23K 37/04

Die Patentansprüche 11 - 14 gelten durch Nichtzahlung der Anspruchsgebühren als verzichtet (Regel 31 (2) EPÜ).

(43) Veröffentlichungstag der Anmeldung: **25.03.92 Patentblatt 92/13**

(84) Benannte Vertragsstaaten: **AT BE CH DE DK ES FR GB GR IT LI LU NL SE**

(71) Anmelder: **Winkelhuis, H.**
**Magnoliastraat 29**
**NL-7161 BS Neede(NL)**

(72) Erfinder: **Winkelhuis, H.**
**Magnoliastraat 29**
**NL-7161 BS Neede(NL)**

(54) **Verfahren, Vorrichtung und Baukastensystem mit Haltetafeln zur Bearbeitung von Werkstücken verschiedener Grössenordnung.**

(57) Es wird ein neues Verfahren vorgeschlagen das unmittelbar in Verbindung gebracht wird mit einer dazu anwendbaren Halterungsvorrichtung, zur generellen Bearbeitung von Werkstücken verschiedener Grössenordnung die während der Bearbeitung mittels Halteorganen (2) auf einem gemeinsamen Untergrund (9) zu fixieren bzw. aufzuspannen sind. Im Gegensatz zum üblichen Verfahren sind für Werkstücke verschiedener Grössenordnung nun nicht mehr unterschiedenen Halteplatten notwendig sondern kann man sich jetzt einfacherweise bedienen von nur einer einzigen rechteckigen und somit einstückigen, flächigen und biegesteifen Halteplatte(1) zum Festklemmen bzw.Aufspannen darauf eines Werkstückes derart, dass erst eine Verarbeitung dann stattfindet nachdem der gemeinsamen Untergrund (9) zur Halterung eines Werkstückes zur Anpassung an jedem Werkstück verschiedenster Abmessungen, nach Art eines Baukastensystems zu einer Halterungsvorrichtung obenbeschriebener Art zusammengesetzt wird aus einer Mehrzahl von vorzugsweise polygonalen Haltetafeln (10) welche vorabgehend an der geplanten Festklemmung je nach der erforderlichen Grösse gegenseitig in ihren Randbereiche (12,13) biegesteif miteinander gekuppelt werden derart dass die so gekuppelten Haltetafeln (10) insgesamt eine einstückige, integrale und beliebig leicht ausbreitbare bzw. leicht einschränkbare Werkstückhalterungsoberfläche (1) bilden worauf Werkstücke jeder Grössenordnung nun wie üblich je festzuklemmen bzw. aufzuspannen sind.

FIG. 1

Die Erfindung bezieht sich auf ein Verfahren zur Bearbeitung von Werkstücken verschiedener Grössenordnung die während der Bearbeitung mittels Halteorganen auf einem gemeinsamen flachen Untergrund zu fixieren bzw. aufzuspannen sind und wobei man sich jeweils bedient von einer rechteckigen einstückigen, flächigen und biegesteifen Halteplatte zum Festklemmen bzw. Aufspannen darauf eines Werkstückes. Ausserdem betrifft die Erfindung eine Vorrichtung zur Halterung bzw. Positionierung und Bearbeitung solcher Werkstücken sowie ein universales Baukastensystem zur Herstellung einer solchen Vorrichtung.

Bis auf diesem Moment findet die normale Verarbeitung von Werkstücken verschiedener Grössenordnung meistens statt mittels einer an der jeweiligen Grössenordnung eines Werkstückes angepassten Halterungsvorrichtung. Es müssen deshalb auch unbedingt mehrere Halterungsvorrichtungen verschiedener Oberflächengrössen vorhanden sein um darauf abwechselnd Werkstücke der bestellten unterschiedenen Abmessungen verarbeiten, herstellen bzw. liefern zu können.

Die Erfindung zieht nun ein neues Verfahren vor das es ermöglicht jede Verarbeitung sehr leicht und einfach zu realisieren und zwar dadurch dass eine Verarbeitung erst dann stattfindet nachdem der gemeinsamen Untergrund zur Halterung eines Werkstückes zur Anpassung an jedem Werkstück verschiedenster Abmessungen, nach Art eines Baukastensystems zusammengesetzt wird aus einer Mehrzahl von vorzugsweise polygonalen Haltetafeln welche vorabgehend an der geplanten Festklemmung bzw. Psitionierung eines Werkstückes je nach der erforderlichen Grösse davon gegenseitig in ihren Randbereichen biegesteif miteinander gekuppelt werden derart dass die so gekuppelten Haltetafeln insgesamt eine einstückige, integrale und beliebig leicht ausbreitbare bzw. leicht einschränkbare Werkstückhalterungsoberfläche bilden worauf Werkstücke jeder Grössenordnung üblicherweise festzuklemmen bzw. aufzuspannen sind.

Dieses neue Verfahren ist nun besonders geeignet für die Verarbeitung bzw. Herstellung und Reparatur von Bauteile, wie z.B. für hölzernen Tür- und Fensterrahmen, die in den verschiedensten Abmessungen verarbeitet werden müssen und die schon dadurch erfordern dass der Hersteller dazu wohl verfügen muss über eine Anzahl kleinere und grössere Halterungsvorrichtungen in den meist vorkommenden Abmessungen da er sonst seine Bearbeitung an den Werkstücken überhaupt nicht realisieren kann.

Eine erfindingsgemässe Halterungsvorrichtung zur Bearbeitung von Werkstücke die dazu auf einer einstückigen integralen Halteplatte positioniert, aufgespannt und bzw. festgeklemmt werden, ist nun dadurch gekennzeichnet, dass die einstückige Halteplatte nach Art eines Baukastensystems gebildet wird von einer Vielzahl gesonderten, vorzugsweise identischen Haltetafeln die jeweils an ihrem Randumfang, jedoch unterhalb ihrer Oberfläche, versehen sind mit einer Anzahl von Kupplungsmitteln und eine Mehrzahl solcher Haltetafeln mittels dieser Kupplungsmitteln kuppelbar sind zu einer einzigen biegungssteife einstückige Werkstückhalterungsoberfläche worauf Werkstücke unterschiedlicher Grössen festklembar sind. Mit diesem Baukastensystem ist es erfindungsgemäss nach Belieben möglich die ganze Spanntafeloberfläche zu vergrösseren oder zu verkleinern je nach der Grösse der zu verarbeitenden Werkstücken.

Dabei ist jeweils eine erfindungsgemässe Vorrichtung dadurch gekennzeichnet, dass ein Haltetafel gebildet wird von einem flachen polygonalen Tafeleinheit welche an jeder Umfangsseite versehen ist mit ersten Kupplungsmittel und weiter Spannorgane vorgesehen sind die je in Eingriff gebracht werden können mit den ersten und mit komplementären Kupplungsmittel an einem benachbarten Haltetafel.

Es ist vorteilhaft indem die Vorrichtung mit mehreren Haltetafeln ausgeführt ist wovon jeder eine kwadratische Form hat, dabei vorzugsweise aus relativ dünnes biegefestes Material zusammengestellt ist dass an seiner vom Werkstück abgekehrten Rückseite, zumindest versehen ist mit einer hochstehenden Randversteifung.

Nach der Erfindung ist weiter vorgesehen dass die Vorrichtung dadurch gekennzeichnet ist dass die Kupplungsmittel am Haltetafel im Randbereich der Umfangsseiten vorgesehen sind.

Vorzugsweise ist die Vorrichtung derart konstruiert, dass die Randversteifung gebildet wird von einer Zahl an der Rückseite des Haltetafels senkrecht aufstehenden Randstreifen wodurch der Haltetafel gebildet ist wie eine untiefe Dose, insbesondere kann also ein Haltetafel gebildet werden von einer hohlen Dose. Wegen der beabsichtigten Ausübung von erheblichen Spannkräfte ist es vorteilhaft indem jeweils ein Haltetafel an seiner Rückseite bzw. im Innere, versehen ist mit Versteifungsrippen. Einfachkeitshalber sind zwischen den Haltetafeln Kupplungsmittel vorgesehen, in Form von Löchern, die sich mindestens im Bereich der Ecken eines Halteelementes befinden und werden die Spannorgane von handelsüblichen Bolzen und Muttern gebildet.

Weiter kann auch vorzugsweise vorgesehen werden in einem schnellen Anbau einer kleineren Halterungsvorrichtung zu einer grösseren Vorrichtung mittels vorgesehenen an und für sich bereits bekannte Kupplungsmittel und Spannorgane in Form z.B. von Schnellspannverschlüsse die zwischen den überstehenden Rändern an den Haltetafeln angebracht sind.

In einer bevorzugten Ausführungsform einer erfindungsgemässen Vorrichtung ist die dem Werkstück zugekehrte Seite der Oberfläche eines Haltetafels versehen mit einer Vielzahl von Löchern die nach einem festen Patron derart angebracht sind dass ein Hilfs- oder Spanngerät zum Festklemmen eines Werkstückes darin leicht abzustellen ist. Es existieren dafür z.B. hydraulische oder pneumatische Ausführungen solcher Geräte.

Die Erfindung bezieht sich ebenfalls auf eine Haltetafeleinheit zur Anwendung bei einer erfindungsgemässen Vorrichtung welche unter Benutzung des Verfahrens nach Art eines Baukastensystems daraus zusammengesetzt ist.

Mehrere Haltetafeln können vom Hersteller für die Verarbeitung der Werkstücken im Vorrat gehalten werden wie bei einem universalen Baukastensystem, mit einer Vielzahl von vorzugsweise identischen polygonalen Haltetafeleinheiten die je zu versehen sind mit Kupplungsmittel bzw. Spannorgane zur gegenseitigen Verbindung zu einer grösseren biegesteifen Bearbeitungsoberfläche. Wird dabei die Form einer Tafeleinheit kwadratisch gewählt, sind kwadratischen Haltetafeleinheiten in Form einer untiefen Dose zumindest versehen mit Randversteifungen und vorzugsweise mit weiteren inneren Versteifungen und die dem Werkstück zugekehrte Oberfläche der Dose kann versehen sein mit einem bestimmten Lochpatron zur Befestigung von dazu geeigneten Hilfsgeräte bzw. Festklemmorgane.

Ein sehr besonderer Vorteil ensteht nun auch dadurch, dass der Transport kleinerer Haltetafeleinheiten die nach dem neuen Verfahren zu einer grösseren Halterungsvorrichtung zusammenzusetzen sind, ziemlich viel leichter ist als der Transport einer einzigen grossen Halterungsvorrichtung die z.B. für die Herstellung und/oder Verarbeitung von ganz grossen Fensterrahmeneinheiten dient. Der Unterschied liegt zwischen dem Transport einerseits mit einem LKW und andererseits mit einem PKW bzw. mit einem Minitransportbus.

Die Erfindung wird nun hiernach an Hand eines Ausführungsbeispiels erläutert.

Fig. 1 zeigt eine perspektivische Ansicht einer Halterungsvorrichtung die nach dem Verfahren zusammengesetzt ist aus 12 Haltetafeleinheiten;

Fig. 2 zeigt die Haltevorrichtung nach Fig. 1 von der Rückseite ab gesehen;

Fig. 3 zeigt eine perspektivische Draufsicht eines einzigen Haltetafels und

Fig. 4 zeigt eine perspektivische Unteransicht des Haltetafels der Fig. 3.

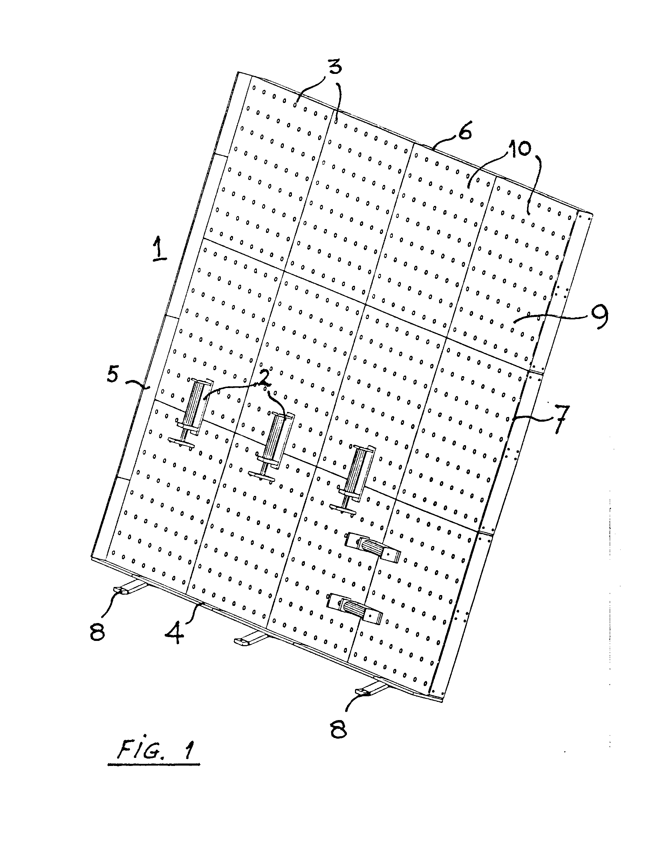

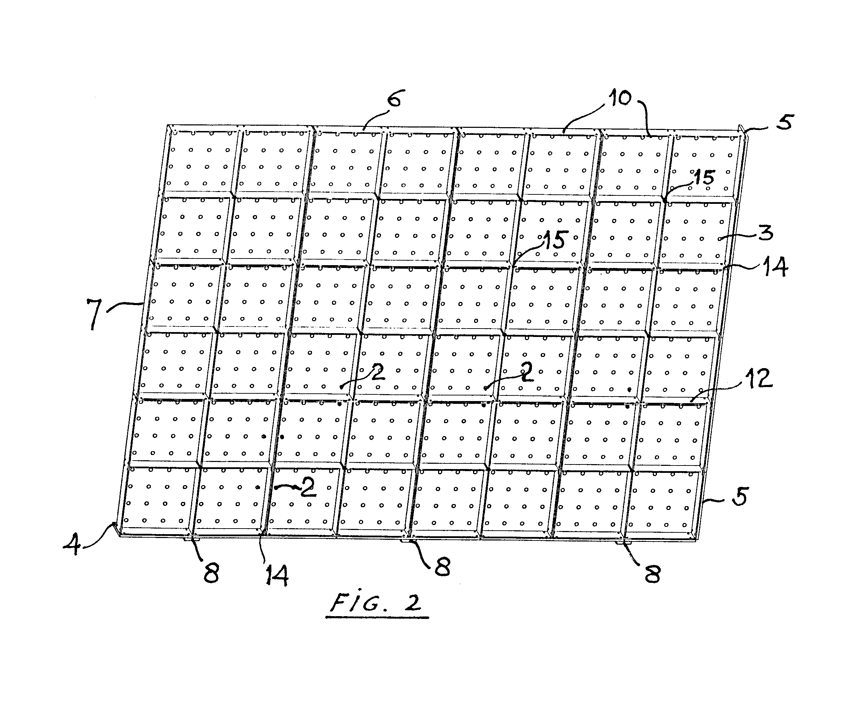

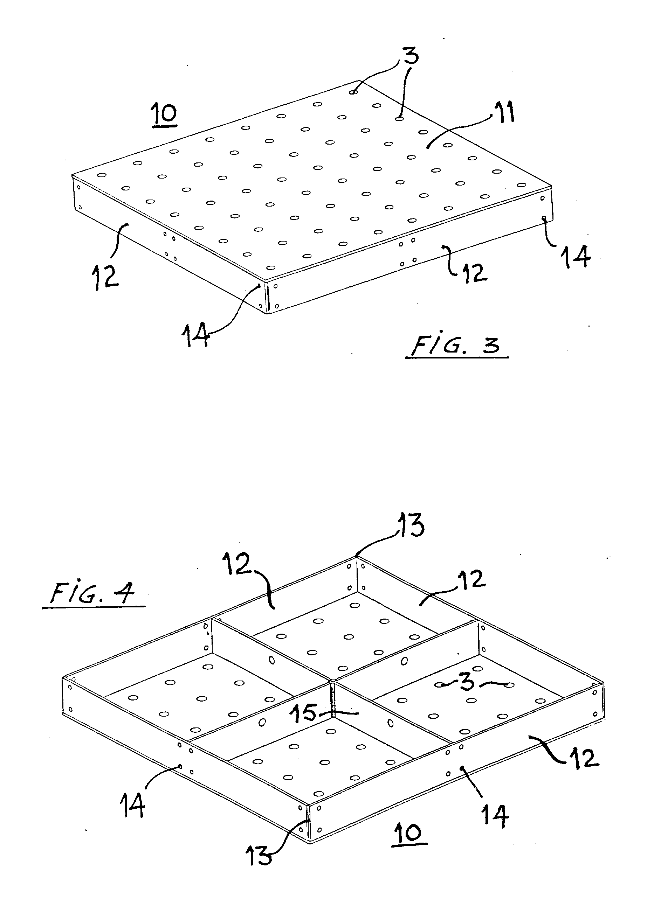

Die Halterungsvorrichtung 1 zeigt einen flachen Tafel worauf ein Werkstück aufgespannt werden kann mittels Spannorgane 2. Die Tafeloberfläche ist dazu über seine ganze Höhe und Breite versehen von Löcher 3 und jedes Spannorgan 2 ist an der, der Tafeloberfläche zugekehrte Seite mit Zapfen oder Schrauben (nicht gezeichnet) versehen die durch den Löchern 3 hingesteckt werden und die an der Rückseite der Tafeloberfläche verriegelbar sind, z.B. mittels Muttern wodurch die Spannorgane 2 am gewünschten Ort und Stelle fixierbar sind. Diese Spannorgane 2 gehören nicht zu der Erfindung und sie sind deshalb nicht weiter von Bedeutung; ihre Wirkung beruht auf einen Arbeitszylinder, der mit seinem Gehäuse in zwei verschiedenen Löchern 3 auf der Tafeloberfläche fixierbar ist, und die Treibstange die ausserhalb des Zylinders mit einem Spanngriff versehen ist. Es gibt weiter zwei aufstehenden Ränder 4 und 5 die es ermöglichen ein Werkstück, z.B. ein Fensterrahmen, zuerst in zwei Hauptrichtungen auf der schräg aufgestellten Halterungsoberfläche zu positionieren. Der Oberrand 6 und der Rand 7 sind hier nicht hochstehend ausgeführt obwohl die Möglichkeit nicht auszuschliessen wäre. Der aufstehende Unterrand 4 ist versehen mit drei Stütze 8 und wird hier die Schrägstellung der Halterungsvorrichtung 1 bevorzugt, wird man weiter dafür Sorge tragen dass diese Schrägstellung während einer Bearbeitung eines Werkstückes beibehalten bleibt, z.B. durch Anwendung von einem oder mehreren üblichen Hilfsstützen oder mittels einer Befestigung an einer Wand. In den Fig. 1-2 ist ersichtlich wie die grosse integrale Halteplatte 9 von insgesamt 12 kleineren identischen Haltetafeln 10 zusammengesetzt ist. Nach den Fig. 2-3 besteht jeder Haltetafel 10 aus einer gelochten Platte 11 mit Löcher 3 für den hiervorerwähnten Zweck. In den Randbereiche sind senkrechte Streifen 12 z.B. angeschweisst die auch in den Eckbereiche 13 der dosenartigen Haltetafel 10 gegenseitig verschweisst sind. In den senkrechten Streifen 12 befinden sich mehrere Löcher 14, und zwar in jedem Streifen zwei Löcher im jeden Eckbereich 13 und in der Mitte dazwischen auch noch zwei. Diese Löcher 14 dienen dafür um mittels Schrauben und Muttern die gesonderten Haltetafeln 10 zu einer einheitlichen Halteoberfläche mit einander zu verbinden, wie gezeigt in den Fig. 1-2. In Fig. 4 ist noch eine zusätzliche innenseitige Versteifung 15 vorgesehen die daraus besteht dass die Mittelbereiche der Streifen 12 an einem Streifenkreuz festgeschweisst sind, wie gezeigt. Es ist hier nicht notwendig um die genaue Art der Verschweissung mit dem Haltetafel weiter auseinanderzusetzen; fachmännische Kenntnisse genügen dazu.

Es wird nun auch ganz klar sein dass bei dem Transport einer erfindungsgemässen Halterungsvorrichtung kaum Schwierigkeiten auftreten wie es sonst bei grösseren bekanntlich orthodox konstruierten Ausführungen unvermeidlich ist. Der Aufbau bzw. der Abbau geschieht jetzt ganz leicht und die Haltetafeln sind nun äusserst transportabel wegen den geringen Abmessungen die man sich frei wählen kann. Reparatur und Verarbeitung an kleineren und grösseren Werkstücken lassen sich mit dem neuen Verfahren und mittels des Baukastensystems am Ort und Stelle einfach ausführen wodurch sich auch ein zweckloses hin- und her Transport zur sonst erforderlichen Verarbeitung der viel zu grossen Werkstücke in einem weit weg gelegen Werkstatt vermeiden lässt. Die Streifen **4** und **5** die zur Positionierung dienen, gehören auch zum Baukastensystems und diese sind z.B. mittels handelsüblichen Schrauben und Muttern nach Belieben an den senkrechten Streifen **12** zu kuppeln unter Benutzung der Löchern **14** und/oder Zapfen bzw. Schrauben die bereits in den Streifen **4** und **5** angebracht sind. Es spricht für sich dass die Haltetafel **10** ausser der gezeigten kwadratischen Form natürlich auch rechteckig oder dreieckig sein könnten. Es wird nur beabsichtigt mit den Haltetafeln **10** eine biegesteife Halterungsoberfläche zu bilden. Weder diese handelsübliche Schrauben und Muttern sind in der Zeichnung dargestellt, noch eventuelle auch bereits bekannte Schnellspannverschlüsse die zweckdienlich sein könnten. Der Benutzer von schnell transportabelen Halterungsvorrichtungen wird sich mit den Schnellspannverschlüsse natürlich sehr viel Zeit und Arbeit ersparen.

**Patentansprüche**

1.  Verfahren zur Bearbeitung von Werkstücken verschiedener Grössenordnung die während der Bearbeitung mittels Halteorganen (**2**) auf einem gemeinsamen Untergrund (**9**) zu fixieren bzw. aufzuspannen sind und wobei man sich jeweils bedient von einer rechteckigen einstükkigen, flächigen und biegesteifen Halteplatte (**1**) zum Festklemmen bzw.Aufspannen darauf eines Werkstückes, dadurch gekennzeichnet, dass eine Verarbeitung erst dann stattfindet nachdem der gemeinsamen Untergrund (**9**) zur Halterung eines Werkstückes zur Anpassung an jedem Werkstück verschiedenster Abmessungen, nach Art eines Baukastensystems zusammengesetzt wird aus einer Mehrzahl von vorzugsweise polygonalen Haltetafeln (**10**) welche vorabgehend an der geplanten Festklemmung je nach der erforderlichen Grösse gegenseitig in ihren Randbereiche (**12,13**) biegesteif miteinander gekuppelt werden derart dass die so gekuppelten Haltetafeln (**10**) insgesamt eine einstückige, integrale und beliebig leicht ausbreitbare bzw. leicht einschränkbare Werkstückhalterungsoberfläche (1) bilden worauf Werkstücke jeder Grössenordnung üblicherweise festzuklemmen bzw. aufzuspannen sind.

2.  Halterungsvorrichtung zur Bearbeitung von Werkstücke die auf einer einstückigen Halteplatte (**1**) festgeklemmt werden, dadurch gekennzeichnet, dass die einstückige Halteplatte (**1**) nach Art eines Baukastensystems gebildet wird von einer Vielzahl von gesonderten, vorzugsweise identischen Haltetafeln (**10**) die jeweils an ihrem Randumfang (**12,13**), jedoch unterhalb ihrer Oberfläche, versehen sind mit einer Anzahl von Kupplungsmitteln und eine Mehrzahl solcher Haltetafeln (**10**) mittels dieser Kupplungsmitteln kuppelbar sind zu einer einzigen biegungssteife einstückige Werkstückhalterungsoberfläche (**9**) worauf Werkstücke unterschiedlicher Grössen festklembar sind.

3.  Vorrichtung nach Anspruch 2, dadurch gekennzeichnet, dass jeweils ein Haltetafel (**10**) gebildet wird von einem flachen polygonalen Tafeleinheit welche an jeder Umfangsseite (**12,13**) versehen ist mit ersten Kupplungsmittel und Spannorgane vorgesehen sind die je in Eingriff gebracht werden können mit den ersten und mit komplementären Kupplungsmittel an einem benachbarten Haltetafel.

4.  Vorrichtung nach Anspruch 3, dadurch gekennzeichnet, dass ein Haltetafel (**10**) ausgeführt ist in einer kwadratischen Form, vorzugsweise aus relativ dünnes biegefestes Material dass an seiner vom Werkstück abgekehrten Rückseite, zumindest versehen ist mit einer Randversteifung (**12,13**).

5.  Vorrichtung nach Anspruch 3, dadurch gekennzeichnet, dass die Kupplungsmittel am Haltetafel (**10**) im Randbereich der Umfangsseiten (**12,13**) vorgesehen sind.

6.  Vorrichtung nach Ansprüche 4-5, dadurch gekennzeichnet, dass die Randversteifung gebildet wird von einer Zahl an der Rückseite des Haltetafels senkrecht aufstehenden Randstreifen (**12**) wodurch der Haltetafel (**10**) gebildet ist wie eine untiefe Dose.

7.  Vorrichtung nach Anspruch 3, dadurch gekennzeichnet, dass ein Haltetafel (**10**) gebildet wird von einer hohlen Dose.

8.  Vorrichtung nach Ansprüche 6-7, dadurch gekennzeichnet, dass der Haltetafel (**10**) an seiner Rückseite bzw. im Innere, versehen ist mit Versteifungsrippen (**15**).

9.  Vorrichtung nach einem der Ansprüchen 2-4, dadurch gekennzeichnet, dass die Kupplungsmittel, in Form von Löchern (**14**), sich mindestens im Bereich der Ecken (**13**) eines Haltetafels (**10**) befinden und die Spannorgane von handelsüblichen Bolzen und Muttern gebildet werden.

10. Vorrichtung nach einem der Ansprüchen 2-4, dadurch gekennzeichnet dass Kupplungsmittel und Spannorgane in Form von Schnellspannverschlüsse zwischen den überstehenden Rändern (**12,13**) an den Haltetafeln (**10**) versehen sind.

11. Vorrichtung nach einem der Ansprüchen 2-5, dadurch gekennzeichnet, dass die dem Werkstück zugekehrte Seite der Oberfläche eines Haltetafels (**10**) versehen ist mit einer Vielzahl von Löchern (**3**) die derart angebracht sind dass ein Hilfsgerät (**2**) zum Festklemmen bzw. Aufspannen eines Werkstückes darin leicht abzustellen ist.

12. Haltetafeleinheit zur Anwendung bei einer Vorrichtung nach einer der vorhergehenden Ansprüche 2-11 und unter Benutzung des Verfahrens nach Anspruch 1.

13. Universal Baukastensystem mit einer Vielzahl von polygonalen Haltetafeleinheiten (**10**) die je zu versehen sind mit Kupplungsmittel bzw. Spannorgane zur gegenseitigen Verbindung zu einer grösseren biegesteifen Bearbeitungsoberfläche (**9**).

14. Baukastensystem nach Anspruch 13, dadurch gekennzeichnet, dass kwadratischen Haltetafeleinheiten (**10**) in Form einer untiefe Dose zumindest versehen sind mit Randversteifungen (**12**) und vorzugsweise mit weiteren inneren Versteifungen (**15**) und die dem Werkstück zugekehrte Oberfläche (**11**) der Dose versehen ist mit einer bestimmten Lochpatrone zur Befestigung von dazu geeigneten Festklemmorgane (**2**).

FIG. 1

FIG. 2

FIG. 3

FIG. 4

**Europäisches Patentamt**

# EUROPÄISCHER RECHERCHENBERICHT

Nummer der Anmeldung

# EP 90 20 2508

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WELDING JOURNAL, Band 65, Nr. 10, Oktober 1986, Seite 62, American Welding Society, Miami, FL, US; "Weldsale, platens, stands and tooling" | 1-8 | B 23 Q 3/10<br>B 23 Q 1/02<br>B 23 K 37/04 |
| | — — — | | |
| A | IDEM | 9 | |
| | — — — | | |
| X | US-A-4 150 630 (POKORNY)<br>* Spalte 2, Zeilen 44-52; Spalte 3, Zeile 54 - Spalte 4, Zeile 28; Figuren 1,3,5 * | 1-3,5,10 | |
| | — — — | | |
| X | US-A-1 874 519 (HAUBROCK)<br>* Seite 2, Zeilen 5-11; Figur 3 * | 1 | |
| A | | 9 | |
| | — — — | | |
| A | US-A-4 677 920 (ECCARDT) | | |
| | — — — | | |
| A | US-A-4 350 193 (McCAMBRIDGE) | | |
| | — — — — — | | |

**RECHERCHIERTE SACHGEBIETE (Int. Cl.5)**

B 23 Q 3/00
B 23 Q 1/00
B 23 K 37/00
A 47 B 1/00
A 47 B 17/00

Der vorliegende Recherchenbericht wurde für alle Patentansprüche erstellt

| Recherchenort | Abschlußdatum der Recherche | Prüfer |
|---|---|---|
| Den Haag | 17 Mai 91 | BOGAERT F.L. |